# EUROPEAN PATENT SPECIFICATION

(11) **EP 2 291 248 B1**
(45) Date of publication and mention of the grant of the patent: **31.05.2017**
(21) Application number: 09749475.1
(22) Date of filing: 25.05.2009
(51) Int. Cl.: C04B 7/153, C04B 7/38, C04B 28/00, C04B 28/02, C04B 7/24, B09B 3/00

(54) **METHOD OF PRODUCING INORGANIC HYDRAULIC BINDERS**
VERFAHREN ZUR HERSTELLUNG VON ANORGANISCHEN HYDRAULISCHEN BINDEMITTELN
MÉTHODE DE PRODUCTION DE LIANTS HYDRAULIQUES INORGANIQUES

(30) Priority: 23.05.2008 CZ 20080318
(43) Date of publication of application: 09.03.2011
(73) Proprietor: Dastit Management Spol. S.r.o., 102 00 Praha 10 (CZ)
(72) Inventor: FALTUS, Milos, 160 00 Praha 6 (CZ)
(74) Representative: Pavlica, Tomas
(86) International application number: PCT/CZ2009/000074
(87) International publication number: WO 2009/140933

(56) References cited:
- EP-A2- 0 470 948
- CN-A- 101 053 870
- GB-A- 2 006 737
- SU-A1- 1 616 872
- SOBOLEV, KONSTANTIN: "Mechano-chemical modification of cement with high volumes of blast furnace slag", CEMENT & CONCRETE COMPOSITES, no. 27, 29 March 2005 (2005-03-29), pages 848-853, XP002617961,
- LUDWIG LEINEWEBER: "KOMPAKTIERUNG VON DEPONIE-SCHUTTGUTERN UND RUCKSTANDEN AUS DER RAUCHGASREINIGUNG", MUELL UND ABFALL, ERICH SCHMIDT VERLAG GMBH & CO, BERLIN, GERMANY, vol. 26, no. 2, 1 February 1994 (1994-02-01), pages 73-77, XP000423355, ISSN: 0027-2957

## Description

### Field of the Invention

This invention relates to a method of producing inorganic hydraulic binders.

### Background of the Invention

In this time, there is a large need for binders in various industries, particularly, for example, in the construction industry or in agriculture. Prices of organic and inorganic binders, together with the price increase of inputs, especially of energy are growing constantly and for the fields of industry, in which their consumption is high, this means a big economic burden. On the other side, in some industries, notably in energetics, metallurgy and the mining industry, a large volume of wastes or only difficult-to-use by-products arises. They represent a considerable burden for the environment. Only a small proportion, 10% - 20%, of these materials finds use in the less challenging field adjustments as a substitute for small aggregates, it is as filler in building materials, or as the so-called puzzolanic part in the so-called "mixed" or "ash containing" cements. Some of the wastes arising in the metallurgical industry, especially a part of the granulated slags, is used as an additive in production of the so-called "slag" cements. Recently, experiments to use granulated slags, some ashes together with heat-activated clays as a basis for production of the so-called "geopolymeric" binders have been performed. However, their production is relatively demanding and their handling is largely different from the conventional practice of handling the conventional building materials and they are accompanied by a number of additional complications. Therefore, in spite of a relatively wide range of interesting characteristics, they do not find too much use in practice. Other materials, such as the material resulting from ground fires, the material of overburdens in open-pit coal mines or material from the burnt out mining deep stock piles are not used for production of binders at all. These materials are affordably priced. Usually, their treatment is not energy-intensive, because enough energy has already been inserted into them. The natural rocks, from which such binders and products can be produced, are not used likewise. They are particularly important in countries where there is absence of large quantities of wastes or by-products from industrial activities there, although exactly such alternative binders and materials on their basis may ensure development of transport infrastructure and of other branches of industry for example, without any construction of investment and energy demanding factories, so as of cement factories.

### Summary of the Invention

The unused potential in making the production of building binders more effective and cheaper can be seen, according to the disclosure, in use of the technology of physical activation, which activation is using action of a strong mechanical, magnetic, acoustic, or electrical impulse on grains of the material treated, which physical activation can not only improve quality of currently commonly produced building binders, or of other binders, but can also significantly enlarge raw material basis for this production, particularly with regard to the use of the waste materials or by-products arising in various large-volume industrial productions. Also, the mechanical activation can bring about considerable energy savings in the form of reducing the quantity of energy consumed for manufacture of the binders.

Subject matter of this invention is a method of producing inorganic binders according to claim 1 applicable particularly for the construction, rehabilitation or solidification purposes. The present invention is advantageously usable in the production of dastite, hydraulic and Roman limes, cements based on Portland clinker, non-clinker and aluminous cements and sulphate binders.

The substance of this invention consists in a method according to claim 1. The application shows that particles of the material of man-made and/or natural origin, selected from the group comprising particularly, but not exclusively, solid products arising from burning of solid fuels, metallurgical slag, products from ground fires, and products from burnt out waste dumps after mining of fossil fuels, glass production waste, ceramics production waste, building brick and concrete waste, thermally activated clays, low-crystalline pyroclastic rocks, sedimentary laterite, bauxite, opalolite, allophanolite, diatomite rocks, limestone, claystone, and clays, which are subjected to physical treatment consisting in the action of at least one force impulse, preferably of more successive force impulses, for passing on of mechanical energy Eₜₖ to particles of the material treated, the result of which is formation of dislocations, disorders, changes in characteristics of the basic cells of the crystalline structures, cracks, crevices, and other defects in their spatial networks of the fractal nature, of active surfaces on the particles of the treated material and on the electrically charged active centers on these defects and active surfaces, and/or for the passing on of magnetic energy Eₜₘ to particles of the treated material by means of alternating and/or variable magnetic field having frequency from 150 to 15.10⁶ Hz and intensity from 10⁻² to 10³ T, which field is acting on particles of the ferromagnetic substances, if they are present in the material treated and/or on charges in the defects of the material particles caused as a consequence of the passing on of mechanical energy, so that the internal energy of particles of the treated material is increasing, the grain size of such materials is made finer, advantageously it is decreased to at least 200 µm, and at the same time re-aggregation of its particles is prevented. The purpose of this treatment, provided in accordance with this invention, is, in particular, an increase in chemical reactivity of the material treated, whereby, at least one of the following benefits is achieved: savings of the energy supplied during the processing, reduction of time consumption, improvement in quality of the final product, enlargement of the application field of the raw materials for processing. According to another preferable embodiment of this invention, transmission of magnetic energy Eₜₘ to the particles of the material processed takes place, preferably simultaneously with the passing on of mechanical energy Eₜₖ or after such passing on. For the purposes of this invention, any grains, crystals, or fragments, pellets or their other aggregates are considered as particles of this material. In the event that granularity of the particles is too coarse, according to the disclosure the particles are crushed to particles of size less than 5 mm at first. Then, the particles are subjected to processing according to this invention.

The sense of the very short acting of the force in the passing on of the mechanical energy is creation of defects in the internal structure of the material treated, because in such a short time acting there is no time to compensate the acting of force.

According to a further advantageous embodiment a chemical additive is added to the processed material before the treatment according to this invention and/or during its progress and/or after this physical treatment, which chemical additive increases the pH and/or supplies ions of elements, which elements are from a set including the elements Ca, Mg, Fe, Mn, P, S, in quantities from 0.50 to 80.00% by weight, based on weight of the material treated. According to another advantageous embodiment a filler in a quantity no more than 700% by weight, based on weight of the treated material, is added together with said additive increasing the pH value or supplying the ions, or also independently, to obtain dry binder and/or dry building material. According to another advantageous embodiment, water is added in quantities from 8.20 to 420% by weight, based on weight of the material treated to obtain formable wet materials, which can be shaped into the desired shape of products or cured by autoclaving and/or dry warming up.

According to a further advantageous embodiment in accordance with this disclosure, in the case when the material treated is a solid product resulting from combustion of the solid fuels, its chemical composition can be optimized by adding of an additive to the combusted solid fuel, which additive contains at least one element from the set comprising Ca, Mg, Fe, Mn, in an amount proportional to the ash and sulfur contents in the combusted solid fossil fuel according to the relationship m_{A} = m_{P}/Xₖₗ + m_{S}.Xₖ₂, where m_{A} is weight of the additive added per one tonne of the solid fuel, m_{P} is weight of ashes contained in one tonne of the solid fuel, m_{S} is weight of sulfur contained in one tonne of the solid fuel, Xₖ₁ is coefficient whose value depends on composition of the additive and is always in the interval of numbers from 2 to 8, Xₖ₂ is coefficient whose value depends on composition of the additive and is always in the interval of numbers from 1 to 4. According to even more favorable embodiment, before burning with a solid fuel this additive can undergo mechanical activation alone or together with the solid fuel. According an advantageous embodiment of this invention, the additive contains at least 30%, more advantageously 40-80% by weight of that element. The additive are, for example, oxides of the element, its carbonates, or hydroxides, or even the element alone.

Advantageously, granulometric and phase compositions of the material treated are optimized by the pressure granulation and/or by the action of electromagnetic radiation in the wavelength range from 1 mm to 10³ mm and the intensity from 10⁻² to 10³ W/cm² for a period of time from 1 to 15.10³ s before passing on of the mechanical energy to grains of the material treated and/or simultaneously with it and/or after such passing on.

Advantageously, granulometric and phase compositions of the material treated are optimized by pressure granulation and/or by thermal warming up to from 150 to 1500°C for the period of time from 5 to 15.10³ seconds before and/or simultaneously and/or after the passing on of mechanical energy to grains of the material treated.

This invention uses physical stimulation of chemical properties of some substances present in a wide range of natural and man-made materials, often regarded as wastes or difficult-to-use by-products, which are capable to hydrate in the presence of water after the above mentioned physical treatment and to re-crystallize to a new phases. This is true particularly if they have enough of highly volatile cations and anions, which may enter into reaction in presence of water. Of course, in the unprocessed state, vast majority of these materials is unable to react in the presence of water, even if they have the optimum chemical composition. Therefore, at first, it is necessary to let these materials undergo physical treatment as described in the preceding paragraph. With the help of using this physical treatment that combines the action of kinetic and magnetic energies, it is possible to use also such materials that cannot be used in processing by other methods. Mainly, these include materials with a high proportion of crystalline structures. The best of them with regard to the energy point of view, in view of the minimum wear of machines for the physical treatment and in view of a suitable phase composition is the use of fluidization ashes generated by incineration of solid fossil fuels at temperatures in the range from 750 to 900° C, preferably using desulphurization agents based on Ca.

If the chemical composition of the material treated is not optimal, that is, there is not enough anions or cations for the necessary reactions, so that physical modification of the material structure alone does not allow formation of newly formed mineralogical phases only in the presence of water, or if the material itself is not able to create environment having sufficiently high pH at the level required for carrying out the reaction, it is necessary to use chemical additives, able to deliver these ions, or at least adjust pH of the environment so that hydration of the ingredients already present in the materials takes place. If it is necessary to use chemical additives, it is the most preferable to let them undergo physical treatment together with the material treated. The quantity and nature of the individual chemical additives should be chosen so that it suits to the best to the stoichiometric composition of the newly formed mineral phases, which we want to create.

The quantity of filler, which can then be added to such binder, depends on a whole number of factors, but usually it does not make sense to add more than 700% by weight of the filler, based on weight of the binder even for the least demanding applications.

The water quantity, added to mixture of the so treated material and filler, depends on the ratio of hydraulically active components in proportion to the inactive substances contained in the material and fillers and on other physical parameters of these components.

If compared with the commonly used methods of treatment of similar materials, the method according to the invention has several advantages. The first advantage is that it is possible to process a range of materials of both natural and man-made origin, such as industrial wastes, which have been deposited in landfills till now, to building binders and products of high quality, and this without any use of binders based on cement, or it is possible to use suitable natural rocks as the starting feedstock there, where there is not any industry. Low energy consumption and low price of raw materials might contribute to this, what is reflected in the low price of binders made from these materials by the method according to the invention.

### Examples of the embodiments of the invention:

This invention will be more readily understood from the following examples of its embodiments. It is important to realize that the examples serve just for illustration of the use of the subject of this invention and that they are not the only possible examples of its use. It is important to realize that the examples are not specified in any limiting sense, but that they are given only to clarify the nature and advantages of this invention. Use of the invention is so wide that in reality it is not possible to specify it completely in the examples.

### Example 1:

### Production of mixed slag Portland cement using granulated slag from the processing of the Ni-silicate ores:

Before pre-calcination and firing, the raw material flour for production of the Portland clinker is subjected to physical treatment in a high-speed disintegrator using movements in opposite directions with a five-row assembly of rotors operating at the peripheral speed of 160 m/s minimally. This results in a faster pre-calcination - decomposition of calcium carbonate to CaO and releasing of CO₂ and to formation of the Portland clinker, which is accelerated by approx. 40%. In comparison to the conventional technologies, this allows achieving of savings in the production of Portland clinker at the level of about 25-30%. The resulting Portland clinker is mixed with 65% by weight of crushed dry granulated metalurgic slag from the processing of Ni-silicate ores together with 5% by weight of energo-gypsum CaSO₄, based on weight of the granulated metallurgical slag mixture with Portland clinker. This mixture is subjected to physical treatment in inertial centrifugal autogenous mill having peripheral speed 350 m/s minimally, on the housing of which there are 6 electromagnets placed having induction vector roughly perpendicular to the direction of the grain movement of the treated material in the working layer of the mill. Then, these magnets exhibit an effect on the treated material, which material contains a large number of ferromagnetic particles, using a variable magnetic field at a frequency of 10⁶ Hz and intensity 10⁻¹ T. This technology can save up to 30% energy for the production of mixed slag Portland cement. Another advantage is higher quality of the cement produced in comparison with the cement produced by grinding using the common technology, exhibiting in the concrete on the basis of these cements higher final values of the compressive strength and of its coming into existence in concretes.

### Example 2:

### Production of dry inorganic binder (dastite) from the material of a burnt out mining deep stock piles after the coal mining:

Material from different layers of a burnt out mining deep stock pile after coal mining is thoroughly homogenized in a landfill at first. Then, it is crushed to a grain size of about 3 mm. At the same time an excitation composition consisting of 25% by weight of non-hydrated CaO, 68% by weight of energo-gypsum dried to free water content 8% by weight maximally, and of 7% by weight of ferric correction for production of cement. This excitation mixture is subjected to physical treatment in a high-speed disintegrator using movements in opposite directions with a three-row assembly of rotors operating at the peripheral speed in the range from 110 to 120 m/s minimally. The homogenized and crushed material of the burnt out waste dump is subjected to physical treatment in a high-speed disintegrator using movements in opposite directions with a five-row assembly of rotors together with the 33.6% excitation mixture so that the excitation mixture is fed to the 3rd row of working bodies. Peripheral speed of the rotors must be 130 m/s minimally. At the exit slit of the disintegrator electromagnets are placed having the induction vector perpendicular to the movement direction of the processed material grains. These magnets will then act on the material treated by means of a variable magnetic field at a frequency of 10³ Hz and intensity of 1.0 T. Thereby dry hydraulic binder (dastite) is obtained. An advantage of this method is that industrial use of otherwise with difficulties utilizable material of burnt out mining waste dump after coal mining is possible at feasible economic conditions. Another advantage of the so produced binder is that by simply mixing it with the Portland mixed cement it is possible to replace up to one half of the common cement in the production of concrete without worsening the basic physical properties of concrete. Permeability values for the pressurized water of the so produced concrete are reduced and the slight contraction in the solidification of concrete becomes a slight expansion (up to 0.25%). Thereby, concretes with outstanding properties for sealing of various joints and cavities there, where water seepages have to be prevented, can be obtained. At the same time economic savings of up to 20% can be achieved, due to production costs of the so produced dastite and common cement.

### Example 3:

### Production of dry inorganic binder (dastite) from ashes from the fluidised combustion of solid fossil fuels:

Dry fluid fly ash and dry fluid ash bed ash containing at least 50% by weight of SiO₂ + Al₂O₃, based on weight of ashes, produced by combustion of solid fossil fuel under addition of a desulphurization additive containing Ca and at a temperature higher than 750°C are mixed together in a ratio in which they are produced by the combustion facility and they are subjected to physical treatment in a high-speed disintegrator using movements in opposite directions with a six-row assembly of rotors and rotor peripheral speed 160 m/s minimally. Thereby, dry inorganic hydraulic binder is produced, for which production it can be used only the fluid ash alone without addition of any chemical activation compounds, the so called exciters. Another advantage is that not only the fly fluid ash, but also the bed fluid ash, for which it is very difficult to find other utilization than as landfill material under normal conditions, are utilized in the binder production, because in its use in concrete in the untreated state there may be threat that it induces delayed formation of ettringite in concrete and cause its degradation. Production costs of the resulting binder are several times lower than those of the common cements or lime based binders.

### Example 4:

### Production of a wet inorganic binder from ashes produced by granulation incineration of solid fossil fuels for the production of autoclave prefabricated products:

The fly granulation ash, containing at least 60% by weight of SiO₂ + Al₂O₃, based on ash weight, from the combustion of solid fossil fuels at a temperature higher than 900°C, is mixed with 400% by weight of silica sand fraction 0 - 4 mm, with 22% by weight of CaO and 5% of energo-gypsum, based on weight of the granulation ash and 75% by weight of water, based on weight of the granulation ash and the mixture is subjected to physical treatment in a high-speed disintegrator using movements in opposite directions with a five-row assembly of rotors and rotor peripheral speed 160 m/s minimally. Thereby, wet mixture is produced suitable for forming of building elements further treated by autoclaving. This technology exhibits several advantages when compared with the common production of the lime-sand autoclaved products. The first advantage is the several times less consumption of CaO (lime), which is the most expensive component of these products, further, an increased strength of the products by about 20% if compared to goods produced by traditional technology. Further these products are less prone to carbonatization degradation and last but not least about to ½ shortened residence time of the products in the autoclave under normal conditions. This saves, also considering the higher energy consumption for physical treatment of the mixture, approx. 30% of the total energy costs for production of prefabricated products, compared to the commonly used technology.

### Example 5:

Production of gypsum binder from energo-gypsum: Dried energo-gypsum containing less than 8% by weight of free water is subjected to physical treatment in a high-speed disintegrator using movements in opposite directions with a three-row assembly of rotors and rotors peripheral speed 100 m/s minimally. From the disintegrator it is supplied to the a vibrating gutter, in which it is spread into a layer with a thickness of up to 5 mm maximally. During passing it through the vibrating gutter, it is exposed to the action of electromagnetic radiation of a wavelength of 5.10² mm and the intensity 2.5.10¹ W/cm² for about 50 s. Then, the material is subjected to physical treatment in a high-speed disintegrator using movements in opposite directions with a five-row assembly of rotors and rotors peripheral speed 120 m/s minimally. This produces a rapidly hardening gypsum binder with similar characteristics, as are those of the normal gypsum binders based on alpha-bassanite. An advantage compared to the traditional method of production by thermal dehydration under normal heating at increased pressure is use of equipment, which is much simpler with regard to investment, cheaper and continuously operating while saving energy at the level of around 20 to 30%.

### Industrial use:

The main fields of industrial implementation of the invention are described in the preceding paragraphs, and this particularly with regard to a significant enlargement of the application of waste materials from a variety of industrial productions for the producing of conventional and non-conventional binders, and in significant energy savings compared to conventional technologies of production of these binders. But the binder is also utilizable after mixing it with water directly to the production of certain products, such as autoclaved products, where it allows significant energy and material savings by allowing that it is possible to reduce using of the most expensive components of such binder - the exciters. Use of this technology will allow economically acceptable and sufficiently productive production of Portland cement, hydraulic lime or air lime in mobile plants of similar size, such as are those of the present mobile crushers and aggregate classifiers.

## Claims

1. Method of producing inorganic binders from a material of man-made or natural origin, or from their combination, in which at least one arbitrary material from a set comprising materials produced by burning of solid fuels, metallurgical slag, ground fire products, products from burnt out mining waste dump after mining of fossil fuels, glass production waste, ceramic production waste, brick and concrete construction waste, heat-activated clays, low-crystalline pyroclastic rocks, sedimentary laterite, bauxite, opalolite, allophanolite, diatomite rocks, limestones and claystones and clays, is subjected to a physical treatment by action of at least one power pulse, during which mechanical energy Eₜₖ is given to the particles of the material treated by acting of a force of the size from 50 to 3.10⁵ N, related to 1 g of the treated material, during a very short time in the range from 1.10⁻⁶ to 1.10⁻²s what is having as consequence that value of the internal energy of the material treated is increasing, the particles of which are becoming more fine, while re-aggregation of its particles is prevented, and thereby, chemical reactivity of the treated material is increasing.

2. Method of producing inorganic binders according to claim 1, **characterized in that** the particles are subjected to a treatment of magnetic energy Eₜₘ of alternate or variable magnetic field having frequency from 150 to 15.10⁶ Hz and intensity from 10⁻² to 10³ T, the magnetic field acting on particles of the ferromagnetic substances if they are present in the treated material or on the charges in defects of the material particles, which defects were produced as a result of passing on mechanical energy.

3. Method of producing inorganic binders according to claim 1, **characterized in that** the physical treatment of the material of man-made or natural origin is carried out by action of more power pulses following each other with a frequency of 10 to 5.10⁴ Hz.

4. Method of producing inorganic binders according to claim 1 or 2, **characterized in that** a chemical additive for increasing of the pH and/or addition of ions, selected from a set comprising at least Ca, Mg, Fe, Mn, P, S, and this in quantity from 0.50 to 80.00% by weight, related to the weight of the treated material is added to the material before the action of at least one power pulse and/or during its action and/or after its action.

5. The method according to claim 1 or 2, **characterized in that** in the treatment of materials, produced by combustion of solid fuels, already during the combustion of the solid fuel an additive containing at least one element from the set comprising Ca, Mg, Fe, Mn is added to optimize their chemical composition, where the additive is added to the fuel in quantities proportional to the ashes and sulfur contents content according to a relationship m_{A} = + m_{P}/Xₖ₁ + m_{S}.Xₖ₂, where m_{A} is the weight of additive added per one tonne of the solid fuel, m_{P} is the weight ashes contained in one tonne of solid fuel, m_{S} is the weight of sulfur contained in one tonne of solid fuel, Xₖ₁ is a coefficient whose value depends on the composition of the additive, and whose value lies in the interval from 2 to 8, Xₖ₂ is a coefficient whose value depends on the composition of the additive, and whose value lies in the interval from 1 to 4, where eventually the additive is subjected to mechanical activation before incineration with the solid fuel, and this alone or together with the solid fuel.

6. The method according to claim 1 or 2, **characterized in that** before passing on of the mechanical energy to the particles of the material treated and/or simultaneously with it and/or after such treatment, the material is treated by pressure granulation and/or by action of electromagnetic radiation in the wavelength range from 1 to 10³ mm and the intensity from 10⁻² to 10³ W/cm² for a period of time from 1 to 15.10³ seconds for optimization of the granulometric and phase compositions of the treated material.

7. The method according to claim 1, **characterized in that** before passing on of the mechanical energy to particles of the material treated and/or simultaneously with it and/or after it, the particles of the treated material are granulated by pressure and/or they are heated to a temperature in the range of 150 to 1500°C for the period of time from 1 to 15.10³ s to optimize the granulometric and phase composition of the treated material.

## Patentansprüche

1. Verfahren zur Herstellung eines anorganischen Bindemittels aus Partikeln aus mindestens einem Material aus einem Materialsatz von künstlichen oder natürlichen Ursprung, wobei der Satz aus Materialien besteht, die durch Verbrennen von festen Brennstoffen, metallurgischen Schlackern, Bodenfeuerprodukten, Verbrennungsprodukten und Müllabfuhr nach Abbau von fossilen Brennstoffen, Glasproduktionsabfällen, keramischen Fertigungsabfällen, Ziegel- und Betonbauabfällen, wärmeaktivierten Tonen, kristallinen pyroklastischen Gesteinen, sedimentärem Laterit, Bauxit, Opalolith, Allophanolit, Kieselsteine, Kalksteine und Tonsteine und Tone hergestellt werden, **dadurch gekennzeichnet, dass** die Teilchen des mindestens einen Materials aus dem Satz von Partikeln mit einer Größe von weniger als 5 mm zuerst zerkleinert werden, wobei die Partikeln einer physikalischen Behandlung durch Einwirkung von wenigstens einem Leistungsimpuls unterworfen werden, wobei die Materialpartikeln durch eine Einwirkung einer Kraft von 50 N bis 3x10⁵ N, bezogen auf 1 g des behandelten Materials während einer sehr kurzen Zeit im Bereich von 1x10⁻⁶ s bis 1x10²s entstanden sind und eine mechanische Energie haben mit dem Ziel Defekte der Materialpartikel zu produzieren, infolge dessen das behandelte Material in der Lage ist, in neuen Phasen zu hydratisieren und zu rekristallisieren.

2. Verfahren zur Herstellung von anorganischen Bindemitteln nach Anspruch 1, **dadurch gekennzeichnet, dass** die Partikel einer Behandlung von magnetischer Energie Etm eines alternativen oder variablen Magnetfeldes mit einer Frequenz von 150 Hz bis 15x10⁶ Hz und einer Intensität von 10⁻² T bis 10³ T unterworfen werden, wobei das Magnetfeld, das auf Partikeln der ferromagnetischen Substanzen wirkt, wenn sie in dem behandelten Material vorhanden sind, oder auf die Ladungen in Defekten der Materialpartikel wirkt, deren Mängel als Folge der Weitergabe mechanischer Energie erzeugt wurden.

3. Verfahren zur Herstellung von anorganischen Bindemitteln nach Anspruch 1, **dadurch gekennzeichnet, dass** die physikalische Behandlung des künstlichen oder natürlichen ursprünglichen Materials durch Einwirkung mehrerer aufeinanderfolgender Leistungsimpulse mit einer Frequenz von 10 Hz bis 5x10⁴ Hz erfolgt.

4. Verfahren zur Herstellung von anorganischen Bindemitteln nach Anspruch 1 oder 2, **dadurch gekennzeichnet, dass** ein chemischer Zusatz zur Erhöhung des pH-Wertes und / oder der Zugabe von Ionen, ausgewählt aus einem Satz, der mindestens Ca, Mg, Fe, Mn, P, S umfasst, ausgewählt ist und dies in einer Menge von 0.50 bis 80.00 Gew. %, bezogen auf das Gewicht des behandelten Materials geschieht, wobei dieses dem Material vor der Einwirkung von mindestens einem Leistungspuls und / oder während seiner Wirkung und / oder nach dessen Wirkung zugegeben wird.

5. Verfahren nach Anspruch 1 oder 2, **dadurch gekennzeichnet, dass** bei der Behandlung von Materialien, die durch Verbrennung von festen Brennstoffen hergestellt werden, bereits während der Verbrennung des festen Brennstoffs ein Additiv, enthaltend mindestens ein Element aus dem Satz von Ca, Mg, Fe, Mn hinzugefügt wird mit dem Ziel ihre chemische Zusammensetzung zu optimieren, wobei das Additiv dem Kraftstoff in Mengen zugesetzt wird, die proportional zum Gehalt an Asche und Schwefelgehalt gemäß einer Beziehung m_{A} = + m_{P} / Xₖₗ + m_{S}.Xₖ₂ sind, wobei m_{A} das Gewicht von Additiv hinzugefügt pro Tonne des festen Brennstoffs ist, mp die Gewichtsasche ist, die in einer Tonne festen Brennstoff enthalten ist, m_{S} das Gewicht des Schwefels ist, der in einer Tonne festen Brennstoff enthalten ist, Xₖ₁ ein Koeffizient ist, dessen Wert von der Zusammensetzung des Additivs abhängt und deren Wert im Intervall von 2 bis 8 liegt, Xₖ₂ ein Koeffizient ist, dessen Wert von der Zusammensetzung des Additivs abhängt und dessen Wert im Intervall von 1 bis 4 liegt, wo schließlich das Additiv einer mechanischen Aktivierung vor der Verbrennung mit dem festen Brennstoff, und zwar alleine oder zusammen mit dem festen Brennstoff unterworfen wird.

6. Verfahren nach Anspruch 1 oder 2, **dadurch gekennzeichnet, dass** vor dem weiteren Einleiten der mechanischen Energie in die Partikeln des behandelten Materials und / oder gleichzeitig mit dieser und / oder nach einer solchen Behandlung das Material durch Druckgranulierung und / oder durch Einwirkung von elektromagnetischer Strahlung im Wellenlängenbereich von 1 bis 103 mm und mit der Intensität von 10⁻² W bis 10³ W/cm² für einen Zeitraum von 1s bis 15x10³ Sekunden zur Optimierung der granulometrischen und Phasenzusammensetzungen des behandelten Materials behandelt wird.

7. Verfahren nach einem der Ansprüche 1 bis 6, **dadurch gekennzeichnet, dass** vor dem weiteren Einleiten der mechanischen Energie in die Partikeln des behandelten Materials und / oder gleichzeitig mit ihm und / oder danach die Partikeln des behandelten Materials durch Druck granuliert werden und sie für eine Zeitspanne von 1 bis 15x10³ s auf eine Temperatur im Bereich von 150 °C bis 1500 °C erwärmt werden, um die granulometrische und Phasenzusammensetzung des behandelten Materials zu optimieren.

## Revendications

1. Procédé de fabrication de liant inorganique à partir de particules d'au moins un matériau provenant d'un ensemble de matériaux d'origine naturelle ou artificielle, l'ensamble comprenant des matières produites par combustion de combustible solides, des scories métallurgiques, des produits d'incendies terrestres et d'une combustion entière de déversements après une extraction de combustibles fossiles, des déchets de verrerie, des déchets de la production de la céramique, des déchets de construction en briques et en béton, des argiles activées par la chaleur, des roches pyroclastiques à faible cristalinité, des roches sédimentaires de bauxite, d'opalolite, d'alloophanolite et de diatomite, des calcaires et des argiles, **caractérisé en ce que** d'abord les particules d'au moins un matériau dudit ensemble sont concassées en particules d'une taille inférieure à 5 mm, les particules étant puis soumises à un traitement physique par action d'au moins une impulsion de puissance, ladite impulsion de puissance donnant une énergie mécanique Eₜₖ aux particules du matériau par une action d'une force de 50 à 3.10⁵ N, liée à 1 g du matériau traité, pendant un temps très court dans une plage de 1.10⁻⁶ à 1.10⁻² s afin de produire des défauts des particules de matériau ce qui a comme conséquence que le matériau traité est capable d'hydrater et de recristalliser à de nouvelles phases.

2. Procédé de fabrication de liant inorganique selon la revandication 1, **caractérisé en ce que** les particules sont soumises à un traitement d'énergie magnétique Eₜₘ de champs magnétique alternatif ou variable ayant une fréquence de 150 à 15.10⁶ Hz et une intensité de 10⁻² à 10³ T, le champs magnétique agissant sur les particules des substance ferromagnétiques, si elles sont présentes dans le matériau traité, ou sur les charges dans défauts des particules de matériau qui ont été produits suite à la transmission d'énergie mécanique.

3. Procédé de fabrication de liant inorganique selon la revandication 1, **caractérisé en ce que** le traitement physique du matériau d'origine naturelle ou artificielle est réalisé par l'action de plusieurs impulsions de puissance se succédant à une fréquence de 10 à 5.10⁴ Hz.

4. Procédé de fabrication de liant inorganique selon la revendication 1 ou 2, **caractérisé en ce que** l'on ajoute un additif chimique pour augmenter le pH et/ou compléter ions, choisi dans un ensemble comprenant au moins Ca, Mg, Fe, Mn, P, S et cela en quantité de 0,50 à 80,00 % en poids, par rapport au poids du matériau traité, au matériau avant l'action d'au moins une impulsion de puissance et/ou pendant son action e/ou après son action.

5. Procédé selon la revendication 1 ou 2, **caractérisé en ce que** lors du traitement de matière produites par combustion de combustible solides, on ajoute déjà pendant la combustion du combustible solide, un additif contenant au moins un élément de l'ensemble comprenant Ca, Mg, Fe, Mn pour optimiser leur compositions chimique, où l'additif est ajouté au carburant en quantités proportionnelles à la teneur en cendres et en soufre selon une relation m_{A} = m_{P} / Xₖ₁ + m_{S}.Xₖ₂, kde m_{A} est le poids de l'additif ajouté pour une tonne de combustible solide, m_{P} est le poids de cendres contenu dans une tonne de combustible solide, ms est le poids de soufre contenu dans une tonne de combustible solide, Xₖ₁ est un coefficient dont la valeur dépend de la composition de l'additif et dont la valeur se situe dans un intervalle de 2 à 8, Xₖ₂ est un coefficient dont la valeur dépend de la composition de l'additif et dont la valeur se situe dans un intervalle de 1 à 4, l'additif étant, le cas échéant, sounmis à une activation mécanique avant incinération avec le combustible solide, et cela seul ou avec le combustible solide.

6. Procédé selon la revendication 1 ou 2, **caractérisé en ce que**, avant le tranfert de l'énergie mécanique aux particules du matériau traité et/ou simultanément à celui et/ou après ce traitement, le matériau est traité par granulation sous pression et/ou par action d'un rayonnement électromagnétique dans une gamme de longueurs d'onde de 1 à 10³ mm et une intensité de 10⁻² à 10³ W/cm² pendant une période de temps de 1 à 15.10³ secondes pour l'optimisation des compositions granulométrique et de phase du matériau traité.

7. Procédé selon la revendication 1, **caractérisé en ce qu'**avant de transmettre l'énergie mécanique aux particules de la matière traitée et/ou en même temps et/ou après, les particules de la matière traitée sont granulées sous pression et/ou chauffées à une température dans une plage de 150°C à 1500°C pendant une période de temps de 1 à 15.10³ s pour optimiser les compositions granulométrique et de phase de la matière traitée.
